# EUROPEAN PATENT APPLICATION

(11) **EP 3 444 479 A1**
(43) Date of publication of application: **20.02.2019**
(21) Application number: 17781949.7
(22) Date of filing: 14.04.2017
(51) Int. Cl.: F04D 25/06, F04D 29/043

(54) **WATER PUMP MOTOR AND WATER PUMP**

(30) Priority: 14.04.2016 CN 201620318054 U; 14.04.2016 CN 201620317776 U
(71) Applicant: Yu, Bingyan, Chaozhou, Guangdong 515700 (CN)
(72) Inventor: Yu, Bingyan, Chaozhou, Guangdong 515700 (CN)
(74) Representative: HGF Limited
(86) International application number: PCT/CN2017/080598
(87) International publication number: WO 2017/177973

(57) **Abstract**

A water pump motor and a water pump are disclosed. The water pump motor includes a stator and a rotor. A through hole is disposed in the rotor along an axial direction of the rotor. A rotation shaft inserted in the through hole. A rotor housing is disposed between the rotor and the stator. At least one shaft sleeve is sleeved on the rotation shaft, disposed in the through hole of the rotor and made of flexible material.

## Description

### TECHNICAL FIELD

The present disclosure relates to the field of a water pump, and for example, to a water pump motor and a water pump with the water pump motor.

### BACKGROUND

Water pumps are widely applied in gardening, fountains and farming. Most of the water pumps include a water pump housing and a motor disposed inside the water pump housing. A rotor of most of the water pump motors is installed in a cavity formed in a rotor housing by a rotation shaft. The rotation shaft is supported by the rotor housing, and there is a certain gap between the rotation shaft and the rotor. When the rotor rotates the rotation shaft, due to a high-speed operation of the rotor, the rotation shaft may swing or deviate from a concentric state with the rotor, resulting in an abnormal operation of the water pump.

Therefore, how to provide a water pump motor and a water pump to ensure that a rotation shaft of the water pump motor will not swing and deviate from the concentric state is a technical problem to be solved by those skilled in the art.

### SUMMARY

The present disclosure provides a water pump motor and a water pump, which can prevent a rotation shaft of the water pump motor from swinging or deviating from a concentric state with the rotor in a rotation process.

A water pump motor includes a stator, a rotor, a rotor housing, a rotation shaft inserted through the rotor and a shaft sleeve sleeved on the rotation shaft. The rotor housing is disposed between the rotor and the stator, the rotation shaft rotates along with the rotor and the shaft sleeve is made of a flexible material.

Optionally, a through hole is disposed in the rotor along an axial direction of the rotor, the rotation shaft penetrates through the through hole, and at least one shaft sleeve is sleeved on the rotation shaft and disposed in the through hole of the rotor.

Optionally, the flexible material is any one of polytetrafluoroethylene material, polyethylene material, rubber material and flexible graphite material.

Optionally, the shaft sleeve is located in the middle of the through hole and the number of the shaft sleeve is one.

Optionally, the shaft sleeves are respectively located at two ends of the through hole.

Optionally, an outer side wall of the shaft sleeve is further provided with at least one water-cooling groove and the water-cooling groove is circumferentially and evenly disposed in the outer side wall of the shaft sleeve.

Optionally, an outer side wall of the shaft sleeve is further provided with at least one water-cooling ring, and the water-cooling ring is coaxial with the shaft sleeve.

Optionally, the shaft sleeve includes a first shaft sleeve and a second shaft sleeve respectively located at two ends of the rotor, wherein the first shaft sleeve is disposed within a groove of the rotor housing and the second shaft sleeve is supported by the rotor housing.

A water pump includes: a pump housing and any one of the above water pump motors. The pump housing is provided with a water inlet and a water outlet, the water pump motor is disposed in the pump housing, the rotation shaft is provided with an impeller, a support frame is disposed on a side of the impeller which is away from the water pump motor, and the rubber sleeve is disposed at each end of the rotation shaft, wherein a first rubber sleeve is disposed within a groove of the rotor housing and a second rubber sleeve is disposed on the support frame.

Optionally, an end of the rotation shaft which is provided with the impeller is further provided with an impeller clamping shaft, the impeller clamping shaft is connected to the rotor and an end of the impeller clamping shaft covers an end of the rotor close to the impeller.

In the water pump provided by the present disclosure, the shaft sleeve made of flexible material is disposed in the through hole of the rotor, to eliminate the gap between the rotation shaft and the rotor and solve the problem that the rotation shaft swings or deviates from a concentric state with the rotor when the rotation shaft rotates at a high speed and meanwhile the gap exists between the rotation shaft and the rotor. The shaft sleeve is made of the flexible material which is not easy to generate heat, and thus the motor is not easily burned out during use and a friction coefficient between the shaft sleeve and the rotation shaft decreases. The shaft sleeve can support long-term use free of water and is not easy to generate heat during use.

The water pump in the present disclosure is provided with the above water pump. The shaft sleeve is disposed between the rotor and the rotation shaft, to eliminate the gap between the rotation shaft and the rotor of the water pump motor, prevent the rotation shaft from swinging or deviating from a concentric state in the rotation process and enable the water pump to work properly.

The present disclosure further provides a water pump, which includes: a pump housing, a rubber sleeve and any one of the above water pump motors. The pump housing is provided with a water inlet and a water outlet. The water pump motor is disposed in the pump housing and an impeller is disposed at an end of the rotation shaft. The rubber sleeve is disposed within the rotor housing and sleeved at an end of the rotation shaft at which the impeller is not disposed and the shaft sleeve is disposed within the rubber sleeve.

Optionally, the flexible material is any one of polytetrafluoroethylene material, polyethylene material, rubber material and flexible graphite material. Optionally, at least three water-cooling grooves are evenly distributed on the outer side wall of the shaft sleeve along a circumferential direction of the shaft sleeve.

Optionally, an outer side wall of the shaft sleeve is further provided with a water-cooling ring and the water-cooling ring is coaxial with the shaft sleeve.

Optionally, the shaft sleeve includes a core and a flexible material layer enclosing the core. The flexible material layer is made of a flexible material and the core is made of alloy or graphite.

Optionally, the impeller is provided with at least two blades.

In the water pump in the present disclosure, the shaft sleeves are sleeved on the rotation shaft and the shaft sleeves are disposed at two ends of the rotor so that the rotation shafts are fixed on the rotor housing to make portions of the rotation shaft extending out of the rotor coaxial with the rotor, thereby preventing an end of the rotation shaft connected to the impeller from swinging or deviating from a concentric state due to the gap between the rotor and the rotation shaft. This can solve the problem that the rotation shaft swings or deviates from the concentric state when the rotation shaft rotates at a high speed when a gap exists between the rotation shaft and the rotor. The shaft sleeve is made of the flexible materials which are not easy to generate heat, and thus the motor is not easily burned out during use and a friction coefficient between the shaft sleeve and the rotation shaft decreases. The shaft sleeve can support long-term use free of water and is not easy to generate heat during use.

### BRIEF DESCRIPTION OF DRAWINGS

FIG. 1 is a structural diagram of a rotor and a rotation shaft of a water pump motor according to an embodiment 1;
FIG. 2 is a partial section view 1 of the rotor and the rotation shaft of the water pump motor according to the embodiment 1;
FIG. 3 is a partial section view 2 of the rotor and the rotation shaft of the water pump motor according to the embodiment 1;
FIG. 4 is a structural diagram of a water-cooling ring disposed on a shaft sleeve according to the embodiment 1;
FIG. 5 is a partial section view of a water-cooling groove disposed on the shaft sleeve according to the embodiment 1;
FIG. 6 is a structural diagram of a water pump according to an embodiment 2;
FIG. 7 is a structural diagram of a water pump according to an embodiment 3;
FIG. 8 is a exploded schematic diagram of the water pump illustrated in FIG. 7; and
FIG. 9 is a section view of a shaft sleeve illustrated in FIG. 7.

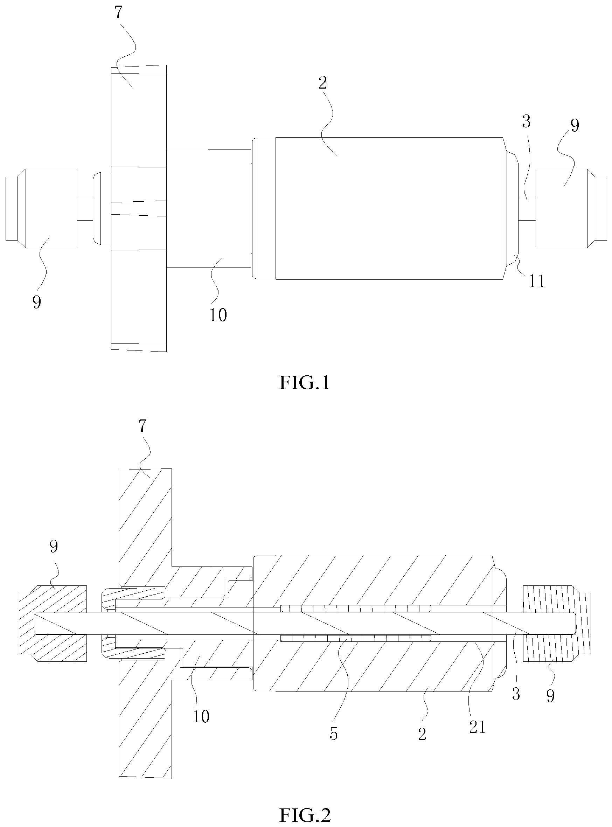

In FIGs. 1 to 6:
1: Stator; 2: Rotor; 21: Through hole; 3: Rotation shaft; 4: Rotor housing; 5: Shaft sleeve; 51: Water-cooling groove; 52: Water-cooling ring; 6: Pump housing; 61: Water inlet; 62: Water outlet; 63: Suction plate; 7: Impeller; 8: Support frame; 9: Rubber sleeve; 10: Impeller clamping shaft

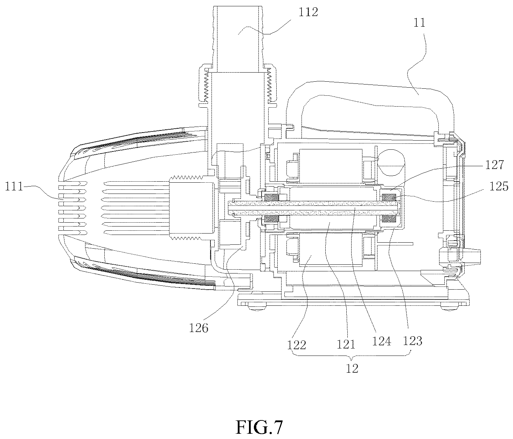

In FIGs. 7 to 9:
11: Pump housing; 111: Water inlet; 112: Water outlet; 12: Motor; 121: Rotor; 122: Stator; 123: Rotor housing; 124: Rotation shaft; 125: Shaft sleeve; 1251: Water-cooling groove; 1252: Water-cooling ring; 1253: Core; 1254: Flexible material layer; 126: Impeller; 1261: Blade; 127: Rubber sleeve

### DETAILED DESCRIPTION

The solutions of the present disclosure will be described below in conjunction with the accompanying drawings and specific embodiments from which these solutions will be apparent to those skilled in the art. If not in collision, the following embodiments and the features thereof may be combined with each other.

### Embodiment 1:

As illustrated in FIGs. 1 and 2, the present embodiment provides a water pump motor. The water pump motor includes a stator 1 and a rotor 2. A through hole 21 is disposed in the rotor 2 along an axial direction of the rotor 2 and a rotation shaft 3 penetrates through the through hole 21. The rotation shaft 3 is made of ceramic. An outer diameter of the rotation shaft 3 is the same as an inner diameter of the rotor 2. A rotor housing 4 is disposed between the rotor 2 and the stator 1. Due to errors in the manufacturing process, a gap may exist between the rotation shaft 3 and the rotor 2. Therefore, in the present embodiment, at least one shaft sleeve 5 is sleeved on the rotation shaft 3, and the shaft sleeve 5 is disposed in the through hole 21 of the rotor 2. The shaft sleeve 5 is made of a flexible material and an outer diameter of the shaft sleeve 5 is slightly larger than an inner diameter of the through hole 21. Optionally, the flexible material is any one of polytetrafluoroethylene material, polyethylene material, rubber material and flexible graphite material.

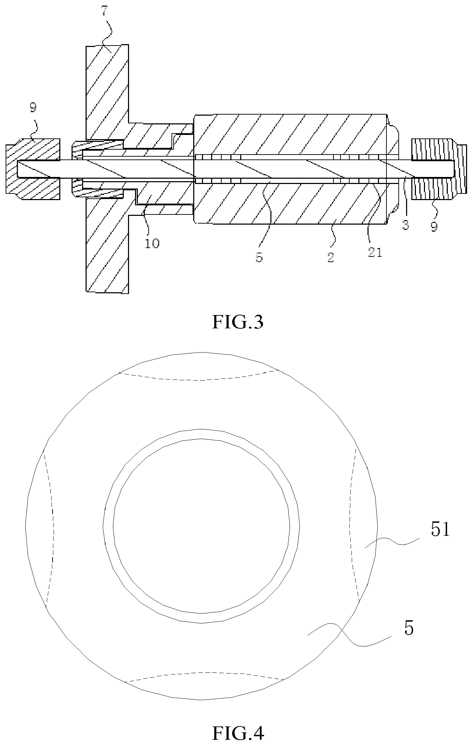

In the present embodiment, the shaft sleeve 5 may be located in the middle of the through hole 21 and the number of the shaft sleeve 5 may be one. Referring to FIG. 3, the number of the shaft sleeve 5 may also be two. Two shaft sleeves 5 are respectively disposed at two ends, i.e., a head end and a rear end, of the through hole 21. No matter where the shaft sleeve 5 is located in the rotor 2, the shaft sleeve 5 is disposed within the through hole 21. In FIG. 2, the gap between the through hole 21 and the rotation shaft 3 is larger to facilitate those skilled in the art to identify the through hole 21, and the gap between a diameter of the through hole 21 and the rotation shaft 3 is smaller in reality.

In the present embodiment, referring to FIG. 4, an outer side wall of the shaft sleeve 5 may be provided with at least one water-cooling groove 51. The water-cooling groove 51 is circumferentially and evenly distributed on the outer side wall of the shaft sleeve 5. The number of the water-cooling groove 51 may be set as needed. When the water-cooling groove 51 is set, the size of the shaft sleeve 5 may be taken into consideration to enable the water-cooling groove 51 to cool the shaft sleeve 5 and the rotor 2 and ensure that the shaft sleeve 5 has a longer service life.

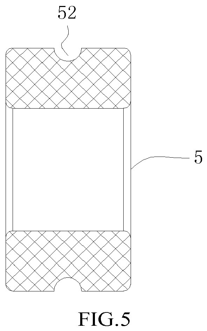

The outer side wall of the shaft sleeve 5 may also be provided with at least one water-cooling ring 52. As illustrated in FIG. 5, the water-cooling ring 52 may be coaxial with the shaft sleeve 5. When three or more water-cooling rings are provided, the water-cooling rings 52 may be arranged at a same distance or at different distances between each other.

In the present embodiment, a water pump motor is provided. The rotation shaft 3 of the motor is provided with the shaft sleeve 5, the shaft sleeve 5 is disposed within the through hole 21 of the rotor 2, and the outer diameter of the shaft sleeve is greater than or equal to the inner diameter of the through hole 21. In this way, the problem that the gap is existed between the rotation shaft 3 and the through hole 21 is solved.

In the present embodiment, the flexible material may be any one of polytetrafluoroethylene material, polyethylene material, rubber material and flexible graphite material. Optionally, the flexible material in the present embodiment ispolytetrafluoroethylene material.

The polytetrafluoroethylene material may be composed of the following components in parts by weight: 6-7 parts of polytetrafluoroethylene, 0.8-1.2 parts of molybdenum disulfide, 0.5-2.5 parts of carbon fiber and 0.5-2.5 parts of para-polyphenyl. In the present embodiment, components of the polytetrafluoroethylene material may be 6 parts of polytetrafluoroethylene, 1 part of molybdenum disulfide, 1.5 parts of carbon fiber and 1.5 parts of para-polyphenyl.

The polytetrafluoroethylene material described above may be prepared by the following method:

The para-polyphenyl and the carbon fiber are dried. The para-polyphenyl is dried at a temperature of 300 ° C for 2 hours. The carbon fiber is dried at a temperature of 260 ° C for 2 hours.

The para-polyphenyl and the carbon fiber dried in the above step are combined with molybdenum disulfide and then mixed with polytetrafluoroethylene at a high speed.

The titanate coupling agent is added to the mixture obtained in the above step; the titanate coupling agent and the mixture are mixed for 1 minute; and then the polytetrafluoroethylene material in the present embodiment is obtained.

The polytetrafluoroethylene material obtained by the above method has an increased hardness compared with the conventional polytetrafluoroethylene raw material. The addition of molybdenum disulfide endows the material with a good oil-free self-lubricating characteristic and the para-polyphenyl has the characteristics of high temperature resistance and good thermal stability. When the shaft sleeve made of the above materials is used, a friction coefficient between the shaft sleeve and the rotation shaft decreases, the shaft sleeve can support long-term use free of water and is not easy to generate heat during use, and thus the motor is not easily burned out during use.

### Embodiment 2:

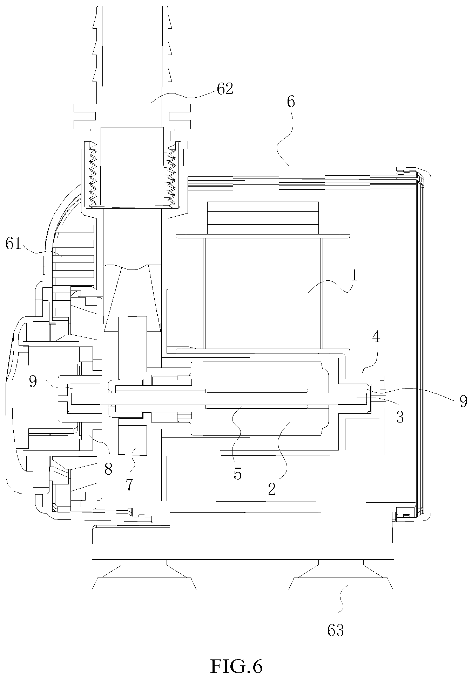

The present embodiment provides a water pump. Referring to FIG. 6, the water pump includes a pump housing 6 and the water pump motor provided in the embodiment 1. The pump housing 6 is provided with a water inlet 61 and a water outlet 62. The water pump motor is disposed in the pump housing 6. The rotation shaft 3 is provided with an impeller 7. A support frame 8 or an impeller housing is disposed on a side of the impeller 7 which is away from the water pump motor. A rubber sleeve 9 is further disposed at each end of the rotation shaft 3. A first rubber sleeve 9 is disposed in a groove of the rotor housing 4 and a second rubber sleeve 9 is disposed on the support frame 8. The structure can support the rotation shaft 3. The rubber sleeves 9 are respectively disposed in the rotor housing 4 and on the support frame 8, ensuring that the rotation shaft 3 and the rotor 2 can rotate concentrically and preventing the rotation shaft 3 from swinging in a rotation process because two ends (head end and rear end) of the rotation shaft 3 extends too long out of the rotor 2.

In the present embodiment, an end of the rotation shaft 3 which is provided with the impeller 7 may further be provided with an impeller clamping shaft 10. The impeller clamping shaft 10 is connected with the rotor 2. And an end of the impeller clamping shaft 10 encloses an end of the rotor close to the impeller 7. The impeller clamping shaft 10 may be made of polyformaldehyde material and can firmly fix the impeller 7 to the rotation shaft 2. The impeller 7 may be provided with at least two impeller blades.

In the present embodiment, the bottom of the pump housing 1 may further be provided with a suction plate (or support plate) 63, which can stably fix the pump housing 1 in an area where water needs to be pumped.

The water pump uses the water pump motor in the embodiment 1 to solve the problem that the water pump cannot work properly due to the gap between the rotor and the rotation shaft of the water pump motor.

### Embodiment 3:

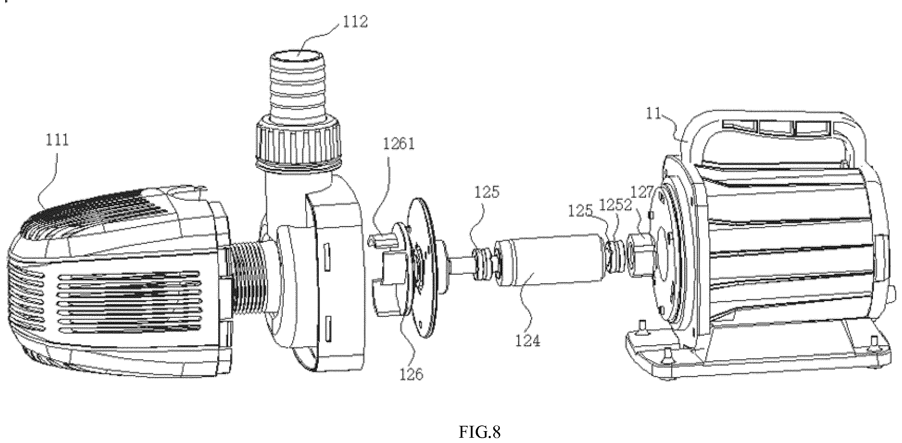

Referring to FIGs. 7 and 8, the present embodiment provides a water pump. The water pump includes a pump housing 11, a motor 12 and a rubber sleeve 127. The pump housing 11 is provided with a water inlet 111 and a water outlet 112. The motor 12 is disposed in the pump housing 11 and the motor 12 includes a rotor 121 and a stator 122. A rotor housing 123 is disposed between the stator 122 and the rotor 121 to separate the stator 122 and the rotor 121. A rotation shaft 124 is inserted in the rotor 121 to rotate along with the rotor 121. A shaft sleeve 125 is sleeved on the rotation shaft 124 and the shaft sleeve 125 is located at two ends of the rotor 121. A first end of the rotation shaft 124 is inserted through the rotor 121 and a second end of the rotation shaft 124 is provided with an impeller 126. The impeller 126 is provided with at least two blades 1261. The shaft sleeve 125 is made of flexible material. The rubber sleeve 127 is located within the rotor housing 123 and sleeved at one end of the rotation shaft 125 which is inserted through the rotor 121 (an end at which no impeller is disposed or the end away from the impeller), and the shaft sleeve 125 is disposed within the rubber sleeve 127.

That the shaft sleeve 125 is disposed within the rubber sleeve 127 means that one end of the rotation shaft 124 extends into the rubber sleeve 127 and the shaft sleeve 125 extends into the rubber sleeve 127 as the rotation shaft 124 extends into the rubber sleeve 127. In the present embodiment, the number of the shaft sleeve 125 may be two. A first shaft sleeve 125 may be fixed within the rubber sleeve 127 and a second shaft sleeve 125 may be supported by the rotor housing 123. The rubber sleeve 127 is disposed to fix the rotation shaft 124 in a chamber formed by the rotor housing 123.

In order to rapidly cool the shaft sleeve 125 which is generating heat, an outer side wall of the shaft sleeve 125 may be provided with at least one water-cooling groove 1251. At least three water-cooling grooves 1251 are evenly distributed on the outer side wall of the shaft sleeve 125 along a circumferential direction of the shaft sleeve 125.

On the basis of the above technical solutions, the water-cooling groove 1251 may be replaced by a water-cooling ring 1252. Optionally, the water-cooling ring 1252 may be disposed on the outer side wall of the shaft sleeve 125 and the water-cooling ring 1252 is coaxial with the shaft sleeve 125.

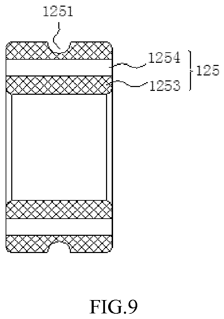

As illustrated in FIG. 9, in the present embodiment, to increase hardness of inside of the shaft sleeve, the shaft sleeve 125 may include a core 1253 and a flexible material layer 1254 enclosing the core. The flexible material layer 1254 may be made of flexible material and the core 1253 may be made of alloy or graphite.

In the present embodiment, the flexible material may be any one of polytetrafluoroethylene material, polyethylene material, rubber material and flexible graphite material. Optionally, the flexible material in the present embodiment may be polytetrafluoroethylene material.

The polytetrafluoroethylene material may be composed of the following components in parts by weight: 6-7 parts of polytetrafluoroethylene, 0.8-1.2 parts of molybdenum disulfide, 0.5-2.5 parts of carbon fiber and 0.5-2.5 parts of para-polyphenyl. In the present embodiment, the components of the polytetrafluoroethylene material may be 6 parts of polytetrafluoroethylene, 1 part of molybdenum disulfide, 1.5 parts of carbon fiber and 1.5 parts of para-polyphenyl.

The polytetrafluoroethylene material described above may be prepared by the following method:

The para-polyphenyl and the carbon fiber are dried. The para-polyphenyl is dried at a temperature of 300 ° C for 2 hours. The carbon fiber is dried at a temperature of 260 ° C for 2 hours.

The para-polyphenyl and the carbon fiber dried in the above step are combined with molybdenum disulfide and then mixed with polytetrafluoroethylene at a high speed.

The titanate coupling agent is added to the mixture obtained in the above step; the titanate coupling agent and the mixture are mixed for 1 minute; and then the polytetrafluoroethylene material in the present embodiment is obtained.

The polytetrafluoroethylene material obtained by the above method has an increased hardness compared with the conventional polytetrafluoroethylene raw material. The addition of molybdenum disulfide endows the material with a good oil-free self-lubricating characteristic and the para-polyphenyl has the characteristics of high temperature resistance and good thermal stability. When the shaft sleeve made of the above materials is used, a friction coefficient between the shaft sleeve and the rotation shaft decreases, the shaft sleeve can support long-term use free of water and is not easy to generate heat during use, and thus the motor is not easily burned out during use.

During the use of the water pump, the rotor 121 drives the rotation shaft 125 to rotate , and the impeller 126 rotates along with the rotation shaft 125 because the impeller 126 is disposed on the rotation shaft 125. In the rotation process of the impeller, a high-low pressure chamber is formed in the pump housing so that water can flow from the water inlet 111 into the pump housing and flow out from the water outlet 112.

### INDUSTRIAL APPLICABILITY

The water pump motor and the water pump provided in the present disclosure can eliminate the gap between the rotation shaft and the rotor and prevent the rotation shaft from swinging or deviating from the concentric state with the rotor when the rotation shaft rotates at a high speed.

## Claims

1. A water pump motor, comprising: a stator, a rotor, a rotor housing, a rotation shaft inserted in the rotor and a shaft sleeve sleeved on the rotation shaft, wherein the rotor housing is disposed between the rotor and the stator, the rotation shaft rotates along with the rotor and the shaft sleeve is made of a flexible material.

2. The water pump motor according to claim 1, wherein a through hole is disposed in the rotor along an axial direction of the rotor, the rotation shaft penetrates through the through hole, and at least one shaft sleeve is sleeved on the rotation shaft and disposed in the through hole of the rotor.

3. The water pump motor according to claim 2, wherein the flexible material is any one of polytetrafluoroethylene material, polyethylene material, rubber material and flexible graphite material.

4. The water pump motor according to claim 3, wherein the shaft sleeve is located in the middle of the through hole and the number of the shaft sleeve is one.

5. The water pump motor according to claim 3, wherein the shaft sleeves are respectively located at two ends of the through hole.

6. The water pump motor according to any one of claims 2 to 5, wherein an outer side wall of the shaft sleeve is further provided with at least one water-cooling groove and the water-cooling groove is circumferentially and evenly disposed in the outer side wall of the shaft sleeve.

7. The water pump motor according to any one of claims 2 to 5, wherein an outer side wall of the shaft sleeve is further provided with at least one water-cooling ring, and the water-cooling ring is coaxial with the shaft sleeve.

8. The water pump motor according to claim 1, wherein the shaft sleeve comprises a first shaft sleeve and a second shaft sleeve respectively located at two ends of the rotor, wherein the first shaft sleeve is disposed within a groove of the rotor housing and the second shaft sleeve is supported by the rotor housing.

9. A water pump, comprising: a pump housing, a rubber sleeve and the water pump motor according to any one of claims 1 to 8, wherein the pump housing is provided with a water inlet and a water outlet, the water pump motor is disposed in the pump housing, the rotation shaft is provided with an impeller, a support frame is disposed on a side of the impeller which is away from the water pump motor, and the rubber sleeve is disposed at each end of the rotation shaft, wherein a first rubber sleeve is disposed within a groove of the rotor housing and a second rubber sleeve is disposed on the support frame.

10. The water pump according to claim 9, wherein an end of the rotation shaft which is provided with the impeller is further provided with an impeller clamping shaft, the impeller clamping shaft is connected to the rotor and an end of the impeller clamping shaft covers an end of the rotor close to the impeller.

11. A water pump, comprising: a pump housing, a rubber sleeve and the water pump motor according to any one of claims 1 to 8, wherein
the pump housing is provided with a water inlet and a water outlet; and
the water pump motor is disposed in the pump housing, an impeller is disposed at an end of the rotation shaft, the rubber sleeve is located within the rotor housing and sleeved at an end of the rotation shaft at which the impeller is not disposed, and the shaft sleeve is located within the rubber sleeve.

12. The water pump according to claim 11, wherein the flexible material is any one of polytetrafluoroethylene material, polyethylene material, rubber material and flexible graphite material.

13. The water pump according to claim 11, wherein an outer side wall of the shaft sleeve is further provided with at least one water-cooling groove.

14. The water pump according to claim 13, wherein at least three water-cooling grooves are evenly distributed on the outer side wall of the shaft sleeve along a circumferential direction of the shaft sleeve.

15. The water pump motor according to claim 11, wherein an outer side wall of the shaft sleeve is further provided with a water-cooling ring and the water-cooling ring is coaxial with the shaft sleeve.

16. The water pump according to any one of claims 11 to 15, wherein the shaft sleeve comprises a core and a flexible material layer for surrounding the core, wherein the flexible material layer is made of a flexible material and the core is made of alloy or graphite.

17. The water pump according to claim 16, wherein the impeller is provided with at least two blades.
